# EUROPÄISCHE PATENTANMELDUNG

(11) **EP 2 628 816 A1**
(43) Veröffentlichungstag der Anmeldung: **21.08.2013**
(21) Anmeldenummer: 12155390.3
(22) Anmeldetag: 14.02.2012
(51) Int. Cl.: C23C 4/00, C23C 4/02, C23C 24/08, F01D 5/00

(54) **Verfahren zum Aufbringen einer Wärmedämmschicht**

(71) Anmelder: Siemens Aktiengesellschaft, 80333 München (DE)
(72) Erfinder: Clossen-von Lanken Schulz, Michael, 47661 Issum (DE); Kadau, Kai, 46519 Alpen (DE); Rollmann, Georg, 45472 Mülheim Ruhr (DE)

(57) **Zusammenfassung**

Ein Verfahren zum Aufbringen einer Wärmedämmschicht (4) auf einen Oberflächenbereich (2) eines Bauteils (1) einer Wärmekraftmaschine soll eine verbesserte Haftung der Wärmedämmschicht auf dem Bauteil erlauben und somit die Lebensdauer des Bauteils erhöhen. Dazu umfasst es die Verfahrensschritte:
- Einbringen einer Vertiefung (12) in den Oberflächenbereich (2), und
- Auffüllen der Vertiefung (12) mit einem wärmedämmenden Material (16, 18) derart, dass eine ebene Oberfläche (6) des wärmedämmenden Materials (16, 18) entsteht.

## Beschreibung

Die Erfindung betrifft ein Verfahren zum Aufbringen einer Wärmedämmschicht auf einen Oberflächenbereich eines Bauteils einer Wärmekraftmaschine.

In einer Wärmekraftmaschine wird Wärmeenergie in mechanische Energie umgewandelt, die dann entweder direkt beispielsweise zur Fortbewegung oder zum Antrieb eines Generators zur Erzeugung von elektrischer Energie genutzt wird. Hierzu zählen unter anderen Verbrennungsmotoren, Gas- und Dampfturbinen. In den genannten Beispielen wird die Wärmeenergie letztlich aus einem Verbrennungsprozess gewonnen, wobei bei der Dampfturbine der Umweg über die Erhitzung von Wasser gewählt wird, während bei Verbrennungsmotoren und Gasturbinen direkt Verbrennungsgase genutzt werden.

Da der Wirkungsgrad von Wärmekraftmaschinen üblicherweise mit der Temperatur steigt, besteht die Bestrebung, diese Maschinen mit möglichst hohen Temperaturen zu betreiben. Somit sind Bauteile von Wärmekraftmaschinen typischerweise vergleichsweise hohen Temperaturen ausgesetzt, die somit thermisch und - durch die durch Temperaturgradienten erzeugte unterschiedliche thermische Ausdehnung - mechanisch stark belastet sind.

Um die Lebensdauer der Bauteile trotz der hohen thermischen Belastung zu erhöhen, werden diese daher häufig mit Wärmedämmschichten (so genannte TBC = thermal barrier coating) versehen, die die Bauteile insbesondere in den kritischen und besonders hoch belasteten Bereichen gegen die heißen vorbeiströmenden Fluide schützen und die Bauteiltemperatur senken sollen.

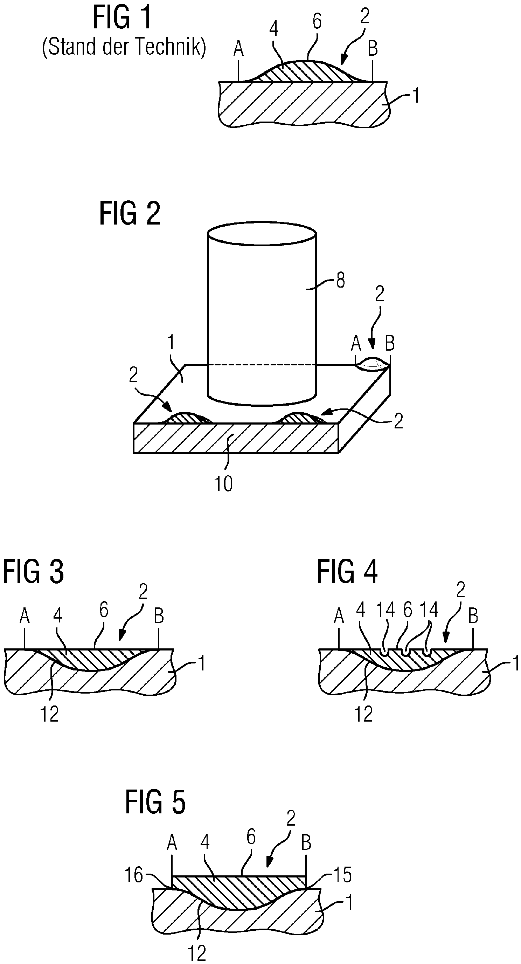

Eine derartige Wärmedämmschicht ist in FIG 1 gezeigt. Ein ausschnittsweise gezeigtes Bauteil 1 ist in einem im Schnitt A-B dargestellten Oberflächenbereich 2 mit einer Wärmedämmschicht 4 versehen. Die Wärmedämmschicht 4 ist auf die flache Oberfläche des Bauteils 1 aufgebracht. Die Oberfläche 6 der Wärmedämmschicht 4 bildet somit eine Wölbung.

Derartige Wärmedämmschichten bestehen häufig aus keramischen Materialien, die vergleichsweise porös sind. Im Betrieb treten dabei häufig Abplatzungen und Rissbildungen auf, die die Wirkung der Wärmedämmschicht vermindern, so dass das Bauteil wieder stärker temperaturbelastet wird.

Der Erfindung liegt daher die Aufgabe zu Grunde, ein Verfahren zum Aufbringen einer Wärmedämmschicht auf einen Oberflächenbereich eines Bauteils einer Wärmekraftmaschine anzugeben, das eine verbesserte Haftung der Wärmedämmschicht auf dem Bauteil erlaubt und somit die Lebensdauer des Bauteils erhöht.

Diese Aufgabe wird erfindungsgemäß durch die folgenden Verfahrensschritte gelöst:
- Einbringen einer Vertiefung in den Oberflächenbereich, und
- Auffüllen der Vertiefung mit einem wärmedämmenden Material derart, dass eine ebene Oberfläche des wärmedämmenden Materials entsteht.

Die Erfindung geht dabei von der Überlegung aus, dass die Abplatzungen insbesondere dort entstehen, wo Heißgas mit hohen Temperaturen an der wärmedämmenden Schicht vorbeiströmt. Ist die wärmedämmende Schicht an diesen Oberflächenbereichen nachträglich aufgebracht, ist sie oft erhaben und bietet dem Heißgas Angriffsflächen für Erosion. Um dies zu vermeiden, sollte wärmedämmende Schicht daher aerodynamisch günstig so eingebracht werden, dass trotz Aufbringen der Schicht eine glatte Bauteiloberfläche entsteht. Dies ist erreichbar, indem zuerst eine Vertiefung mit der inversen Form des gewünschten Wärmedämmschichtprofils in den betreffenden Oberflächenbereich eingebracht wird, die dann mit dem wärmedämmenden Material aufgefüllt wird. Hier eignen sich als besonders keramische Werkstoffe, die einerseits hoch wärmebeständig sind, andererseits flüssig verarbeitet und anschließend gesintert werden.

Weiterhin sind die Abplatzungen auch auf inhomogene Temperaturverteilungen und daraus resultierende unterschiedliche Wärmeausdehnung von Basismaterial und Schichtsystem zurückzuführen. Um dies zu vermeiden, wird vorteilhafterweise das Tiefenprofil der Vertiefung im Wesentlichen durch das Temperaturbelastungsprofil im Betrieb der Wärmekraftmaschine bestimmt. Mit anderen Worten: Die Schichtdickenverteilung wird entsprechend der Temperaturverteilung gestaltet. Dadurch werden einerseits besonders hoch belastete Bereiche des Bauteils besonders gut vor Wärmeeintrag geschützt, andererseits die thermische Ausdehnung von Bauteil und Wärmedämmschicht angeglichen.

Vorteilhafterweise wird die jeweilige Vertiefung während des Gusses des Bauteils eingebracht. Dies kann durch entsprechende Wölbungen in der Gussform geschehen. Dadurch wird ein einheitlicher beschleunigter Fertigungsprozess erreicht. Die Wärmedämmschicht kann direkt nach dem Gießen des Bauteils in die Vertiefung eingebracht werden.

Alternativ oder zusätzlich wird die jeweilige Vertiefung vorteilhafterweise nach dem Guss des Bauteils mittels eines Lasers eingebracht. Dies kann beispielsweise bei einer Nachrüstung oder Reparatur von Vorteil sein, oder aber in Bereichen, in denen entsprechende Gussformen nicht praktikabel sind. Verschiedene Laserverfahren sind möglich, beispielsweise einfaches Aufschmelzen oder aber Aufbau mittels selektiven Laserschmelzens.

Die Dicke der Wärmedämmschicht kann am Rand der Vertiefung auf Null zurückgeführt werden. In diesem Fall bildet die Wärmedämmschicht in der Vertiefung eine abgeschlossene Oberfläche. Vorteilhafterweise liegt die ebene Oberfläche des wärmedämmenden Materials in gleichmäßigem Abstand oberhalb des Randes der Vertiefung. Mit anderen Worten: Die Dicke der Schicht wird nicht auf Null zurückgeführt, sondern auf einen endlichen Wert größer als Null, d. h. außerhalb der Vertiefung ist der restliche Bereich des Bauteils ebenfalls mit einer Wärmedämmschicht gleichmäßiger Dicke beschichtet, die durch die Vertiefung lediglich weiter verdickt wird. Dies kann bei besonders stark thermisch belasteten Bauteilen von Vorteil sein.

In weiterer vorteilhafter Ausgestaltung des Verfahrens wird in das wärmedämmende Material eine Anzahl von Kerben eingebracht. Diese können gezielt in verschiedenen Mustern eingebracht sein und fungieren als Entlastungskerben, die in der Wärmedämmschicht Spannungen im Betrieb abzubauen. Weiterhin wird eine eventuell unvermeidbare Rissbildung kontrolliert, da die Kerben als Sollrissstellen fungieren. Diese können dann entsprechend in nicht versagensrelevanten Bereichen anstatt kritischen Bereichen angebracht sein, was wiederum die Lebensdauer und Haftkraft der Wärmedämmschicht erhöht.

Weiterhin wird vorteilhafterweise in die Vertiefung vor dem Auffüllen eine Anzahl von Kerben eingebracht. Diese Vertiefungen werden dann beim Einfüllen der Wärmedämmschicht ausgefüllt, so dass die Wärmedämmschicht mit dem Boden der Vertiefung eine formschlüssige Verbindung in der Art einer Nut-Feder-Verbindung eingeht. Dadurch wird die Haftung der Wärmedämmschicht erheblich verbessert.

Vorteilhafterweise wird weiterhin das Auffüllen mit einer Mehrzahl unterschiedlicher wärmedämmender Materialien derart durchgeführt, dass mehrere Schichten wärmedämmender Materialien entstehen. Die Schichtdicken beider Schichten können unabhängig voneinander variiert und an die Temperaturverteilung angepasst werden. Auch kann durch eine Zwischenschicht die Haftung verbessert werden, indem z. B. als untere Schicht ein an dem Bauteil besser haftendes Material verwendet wird. Die Kerben können ebenfalls zur Verbesserung der Haftung zwischen den Schichten eingebracht werden, wenn die erste, untere Schicht zunächst aushärtet, bevor die weitere Schicht aufgebracht wird.

Vorteilhafterweise wird ein Bauteil mit dem beschriebenen Verfahren bearbeitet und eine Wärmekraftmaschine, insbesondere eine Strömungsmaschine, umfasst vorteilhafterweise ein derartiges Bauteil.

Die mit der Erfindung erzielten Vorteile bestehen insbesondere darin, dass durch die Einbringung der gewünschten Wärmedämmschichtstrukturen in das Basismaterial des Bauteils glatte Bauteiloberflächen anstatt erhabener entstehen, was die aerodynamischen Eigenschaften der Bauteile verbessert. Dadurch wird nicht nur die Lebensdauer der Wärmedämmschicht durch Vermeidung von Angriffsflächen für Erosion erhöht, auch der Wirkungsgrad der Wärmekraftmaschine wird durch die Verbesserung der Aerodynamik verbessert. Das beschriebene Verfahren ist für eine Vielzahl von Wärmekraftmaschinen anwendbar, insbesondere in Gasturbinen (sowohl stationär als auch für Flugzeugturbinen), hier an den Leit- und Laufschaufeln, Ringsegmenten, Übergängen und anderen Gehäusebauteilen. Darüber hinaus kann das Verfahren auch im Motorenbau, z. B. bei Abgassystemen zur Anwendung kommen.

Die Erfindung wird anhand einer Zeichnung näher erläutert. Darin zeigen:
- FIG 2: ausschnittsweise ein Bauteil einer Wärmekraftmaschine, hier eine Leitschaufel mit Schaufelfuß einer Gasturbine,
- FIG 3: eine in eine Vertiefung des Bauteils eingebrachte Wärmedämmschicht,
- FIG 4: eine Wärmedämmschicht mit Kerben,
- FIG 5: eine Wärmedämmschicht mit nichtverschwindender Schichtdicke außerhalb der Vertiefung,
- FIG 6: eine geschlossene Wärmedämmschicht mit gezielt in die Oberfläche eingebrachten Kerben,
- FIG 7: eine aus zwei unterschiedlichen Materialien bestehende Wärmedämmschicht,
- FIG 8: in die Vertiefung eingebrachte Kerben zur Haftverbesserung der Wärmedämmschicht, und
- FIG 9: eine aus zwei unterschiedliche Materialien bestehende Wärmedämmschicht mit Kerben in der Vertiefung und der unteren Schicht.

Gleiche Teile sind in allen Figuren mit denselben Bezugszeichen versehen.

Das ausschnittsweise dargestellte Bauteil 1 gemäß der FIG 2 ist eine Leitschaufel 8 einer Gasturbine mit dem Schaufelfuß 10. Einzelne Oberflächenbereiche 2 des Schaufelfußes sind im Vergleich zu anderen besonders hoch thermisch belastet. Daher sind diese mit einer Wärmedämmschicht 4 versehen.

Dazu wird zunächst eine in FIG 3 gezeigte Vertiefung 12 in den Oberflächenbereich 2 (hier am Beispiel des Schnitts A-B aus FIG 2 gezeigt) eingebracht. Diese wird mit Keramikschlicker aufgefüllt, der nach dem Sintern eine Wärmedämmschicht 4 mit glatter Oberfläche 6 im Bauteil 1 bildet. Die Vertiefung 12 wird entweder direkt im Gussprozess des Bauteils 1 eingebracht oder nachträglich mittels Laser. Das Profil der Vertiefung 12 ist der Temperaturverteilung nachgeformt.

FIG 4 zeigt das Ergebnis eines weiteren Verfahrensschritts, angewendet nach dem in FIG 3 gezeigten Ergebnis nach dem Sintern der Wärmedämmschicht 4. Hier wurden in die glatte Oberfläche 6 der Wärmedämmschicht 4 Kerben 14 eingebracht. Diese wirken als Entlastungskerben bei thermischer Ausdehnung und als Sollrissstellen im Falle des Reißens.

Eine alternative Ausgestaltung ist in FIG 5 gezeigt. Hier wurde der keramische Schlicker über den Rand 15 der Vertiefung 12 in gleichmäßiger Dicke hinaus aufgefüllt, so dass das gesamte Bauteil 1 mit einer Wärmedämmschicht 4 versehen ist, die sich im Bereich der Vertiefung 12 verdickt, obwohl die Oberfläche 6 glatt bleibt.

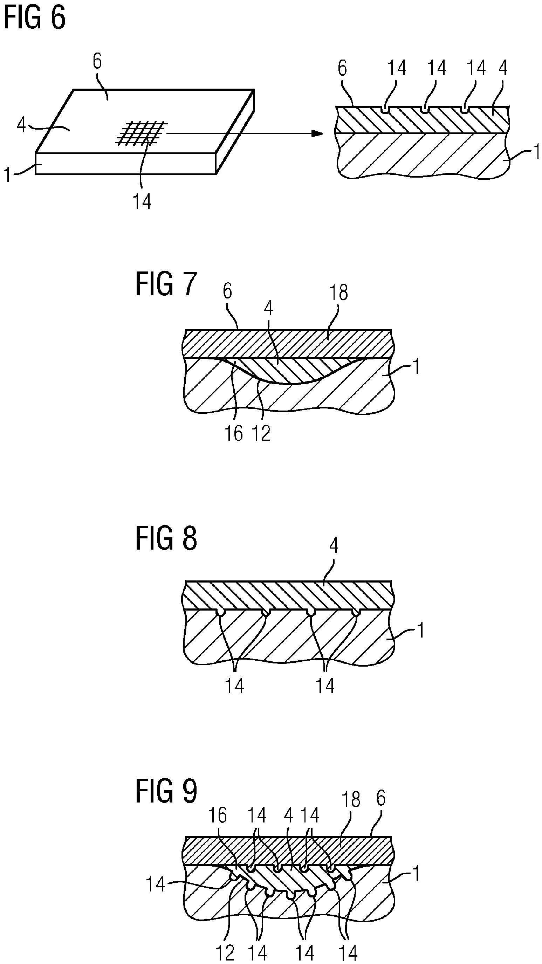

Die geschlossene Wärmedämmschicht 4 über dem Bauteil 1 aus FIG 5 ist in größerem Ausschnitt in FIG 6 gezeigt. Wie dort gezeigt können auch in Bereichen, die nicht über einer Vertiefung 12 liegen, gezielt Kerben 14 eingebracht werden. Im rechts in der FIG 6 dargestellten Schnitt ist dies noch einmal gezeigt.

FIG 7 zeigt eine Ausführungsform mit zwei verschiedenen Materialien für die Wärmedämmschicht 4. Zur Bildung der Wärmedämmschicht 4 wurde zunächst ein keramischer Schlicker eines ersten Materials 16 in die Vertiefung 12 gefüllt und gehärtet. Anschließend wurde ein keramischer Schlicker eines zweiten Materials 18 aufgebracht, der sich auch über den Bereich der Vertiefung 12 hinaus über das Bauteil 1 erstreckt.

FIG 8 und 9 zeigen jeweils Alternativen zu den Ausführungsformen gemäß FIG 6 bzw. 7. In FIG 8 wurden gegenüber der FIG 6 vor dem Aufbringen der Wärmedämmschicht 4 Kerben 14 in das Bauteil 1 eingebracht. Dies verbessert die Haftung der Wärmedämmschicht 4 auf dem Bauteil 1.

In FIG 9 wurden gegenüber der FIG 7 Kerben 14 in die Vertiefung 12 eingebracht, so dass der keramische Schlicker die Kerben 14 ausfüllt und einen Formschluss mit dem Bauteil 1 bildet. Nach dem Härten des ersten Materials 16 wurden in die Oberfläche des ersten Materials 16 ebenfalls Kerben 14 eingebracht, in die der keramische Schlicker des zweiten Materials 18 eindringt. Auch hier wird so die Haftung verbessert.

## Patentansprüche

1. Verfahren zum Aufbringen einer Wärmedämmschicht (4) auf einen Oberflächenbereich (2) eines Bauteils (1) einer Wärmekraftmaschine, umfassend die Verfahrensschritte:
- Einbringen einer Vertiefung (12) in den Oberflächenbereich (2), und
- Auffüllen der Vertiefung (12) mit einem wärmedämmenden Material (16, 18) derart, dass eine ebene Oberfläche (6) des wärmedämmenden Materials (16, 18) entsteht.

2. Verfahren nach Anspruch 1,
bei dem das Tiefenprofil der Vertiefung (12) im Wesentlichen durch das Temperaturbelastungsprofil im Betrieb der Wärmekraftmaschine bestimmt wird.

3. Verfahren nach einem der vorhergehenden Ansprüche,
bei dem die jeweilige Vertiefung (12) während des Gusses des Bauteils (1) eingebracht wird.

4. Verfahren nach einem der vorhergehenden Ansprüche,
bei dem die jeweilige Vertiefung (12) nach dem Guss des Bauteils (1) mittels eines Lasers eingebracht wird.

5. Verfahren nach einem der vorhergehenden Ansprüche,
bei dem die ebene Oberfläche (6) des wärmedämmenden Materials (16, 18) in gleichmäßigem Abstand oberhalb des Randes (15) der Vertiefung (12) liegt.

6. Verfahren nach einem der vorhergehenden Ansprüche,
bei dem in das wärmedämmende Material (16, 18) eine Anzahl von Kerben (14) eingebracht wird.

7. Verfahren nach einem der vorhergehenden Ansprüche,
bei dem in die Vertiefung (12) vor dem Auffüllen eine Anzahl von Kerben (14) eingebracht wird.

8. Verfahren nach einem der vorhergehenden Ansprüche,
bei dem das Auffüllen mit einer Mehrzahl unterschiedlicher wärmedämmender Materialien (16, 18) derart durchgeführt wird, dass mehrere Schichten wärmedämmender Materialien (16, 18) entstehen.

9. Bauteil (1),
bearbeitet mit dem Verfahren nach einem der vorhergehenden Ansprüche.

10. Wärmekraftmaschine mit einem Bauteil (1) nach Anspruch 9.
